(19) Europäisches Patentamt
European Patent Office
Office européen des brevets

(11) EP 1 036 815 A1

(12) # EUROPEAN PATENT APPLICATION

published in accordance with Art. 158(3) EPC

(43) Date of publication:
**20.09.2000 Bulletin 2000/38**

(21) Application number: **98957140.1**

(22) Date of filing: **02.12.1998**

(51) Int. Cl.[7]: **C08L 25/02**, C08L 51/04, C08L 55/02, C08K 3/02, C08K 5/521, C08K 5/34

(86) International application number:
**PCT/JP98/05444**

(87) International publication number:
**WO 99/28382 (10.06.1999 Gazette 1999/23)**

(84) Designated Contracting States:
**DE FR IT**

(30) Priority: **03.12.1997 JP 34848897**
**03.04.1998 JP 10857398**
**19.05.1998 JP 15377098**

(71) Applicant: **CHISSO CORPORATION**
**Osaka-shi Osaka 530-6591 (JP)**

(72) Inventors:
- **IWATA, Masuo**
  **Kanagawa 236-0024 (JP)**
- **WATANABE, Masami**
  **Kanagawa 236-0024 (JP)**
- **TAKEBAYASHI, Takafumi**
  **Kanagawa 236-0024 (JP)**
- **NARITA, Noriaki**
  **Kanagawa 236-0024 (JP)**
- **WATANABE, Taiki**
  **Kanagawa 236-0024 (JP)**
- **WANG, Guofang**
  **Kanagawa 236-0024 (JP)**

(74) Representative: **HOFFMANN - EITLE**
**Patent- und Rechtsanwälte**
**Arabellastrasse 4**
**81925 München (DE)**

(54) **FLAME RETARDANT FOR STYRENE RESINS AND FLAME-RETARDANT STYRENE RESIN COMPOSITION**

(57) A flame retardant comprising polyamide and a phosphorus-based flame retardant containing at least a non-halogenated phosphate ester; and a flame-retardant styrene resin composition containing the flame retardant. The composition combines a high degree of flame retardance with excellent impact resistance, and is therefore suitably usable as a material for household electrical appliances, office automation equipment, parts of automobiles and rolling stock, and other products.

EP 1 036 815 A1

## Description

Technical Field

The present invention relates to a flame retardant for styrene resins and to a flame-retardant styrene resin composition containing the flame retardant.

More particularly, the invention relates to a flame retardant for styrene resins, wherein the flame retardant comprises polyamide and a phosphorus-containing flame retardant containing at least a non-halogenated phosphate ester, and to a flame-retardant styrene resin composition containing the flame retardant.

Background Art

Styrene resins are materials widely used in household electrical appliances, office automation equipment (OA equipment), and further, parts of automobiles, etc., in view that styrene resins have excellent properties such as moldability, dimensional stability, and impact resistance. In recent years, there has been strong demand for imparting flame retardance to products in the aforementioned fields, and studies have been conducted extensively in order to impart flame retardance.

In order to impart flame retardance to highly flammable resins, there has been employed a method that comprises incorporating into a resin a halogen compound exhibiting a high flame-retarding effect, such as a bromine compound, or an antimony compound such as antimony trioxide. Well-known bromine compounds include decabromodiphenyl ether and tetrabromobisphenol A. Although the aforementioned flame retardants provide excellent flame retardance, they may generate hazardous gas through pyrolysis thereof during molding or burning of waste resin compositions containing the flame retardant. Therefore, there is increasing demand for resin compositions containing no halogen compounds.

As a flame-retardant resin composition, there has been proposed a resin composition incorporating a metal hydrate such as magnesium hydroxide or aluminum hydroxide. However, a large amount of such a metal hydrate must be incorporated so as to attain sufficient flame retardance, thereby disadvantageously impairing some characteristics of the resin.

Japanese Patent Application Laid-Open (*kokai*) No. 64-9256 discloses, as a flame-retardant resin composition containing no such metal hydrate, a resin composition comprising a polyphenylene ether resin, ammonium polyphosphate, and a phosphate compound. However, the above-disclosed resin composition must be molded at high temperature, since the composition is produced by incorporating ammonium polyphosphate and a phosphate compound into a polyphenylene ether resin having a high melting point. In this case, the incorporated flame retardant; i.e., ammonium polyphosphate and a phosphate compound, may be disadvantageously volatile or may be pyrolyzed.

Japanese Patent Application Laid-Open (*kokai*) No. 63-161056 discloses, as a flame-retardant resin composition comprising a rubber-modified styrene resin incorporating a polyamide resin, a composition comprising polytetramethylene adipamide, a functional-group-modified styrene resin, and a flame retardant. However, such a resin composition is not widely employed, since resins which can be incorporated into the resin composition are limited.

Japanese Patent Application Laid-Open (*kokai*) Nos. 52-146452, 53-108140, 1-203468, and 5-247342 disclose resin compositions which each comprise a resin composition comprising a thermoplastic polymer or a rubber-modified styrene resin and a polyamide incorporating a flame retardant predominantly containing ammonium polyphosphate. Although such resin compositions have a high degree of flame retardance, the compatibility of the flame retardant predominantly containing ammonium polyphosphate to resin components is insufficient, and molded products produced by molding the resin compositions still have unsatisfactory impact resistance.

Disclosure of the Invention

The present inventors have researched earnestly to obtain a flame retardant which contains no halogen compound and is capable of imparting sufficient flame retardance to styrene resins without impairing impact resistance of the resin products when incorporated into styrene resins, and to obtain a flame-retardant styrene resin composition exhibiting excellent flame retardance and impact resistance.

Thus, the inventors have found that a flame-retardant composition comprising polyamide and a phosphorus-containing flame retardant containing at least a non-halogenated phosphate ester can be incorporated into styrene resins, to thereby impart excellent flame retardance and impact resistance to the styrene resins. The present invention has been accomplished on the basis of this finding.

As is clear from the above description, an object of the present invention is to provide a flame-retardant composition which can impart excellent flame retardance and impact strength to styrene resins. Another object of the invention is to provide a flame-retardant styrene resin composition incorporating the flame-retardant composition.

Accordingly, the present invention includes the following 1) to 20).

1) A flame retardant for styrene resins, the flame retardant comprising polyamide (A) and a phosphorus-containing flame retardant (B) containing at least a non-halogenated phosphate ester.

2) A flame retardant for styrene resins according to 1), wherein the phosphorus-containing flame retardant (B) containing at least a non-halogenated phosphate ester is a composition comprising a non-halogenated phosphate ester (B1) and at least one species selected from among ammonium polyphosphate (B2) and red phosphorus (B3).

3) A flame retardant for styrene resins according to 1) or 2), wherein the non-halogenated phosphate ester (B1) is at least one species selected from a compound represented by formula [4]:

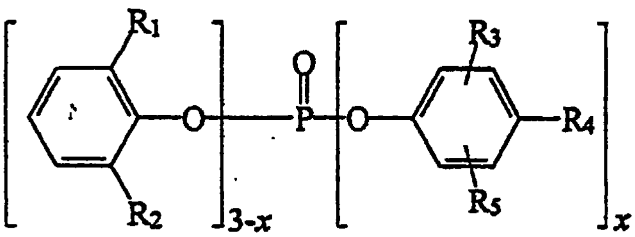

[4]

(wherein x is 0, 1, or 2; $R_1$ and $R_2$, which may be identical with or different from each other, each represent a hydrogen atom or a C1-C9 alkyl group; and $R_3$, $R_4$, and $R_5$, which may be identical with or different from one another, each represent a hydrogen atom or a C1-C9 alkyl group) or a compound represented by formula [5]:

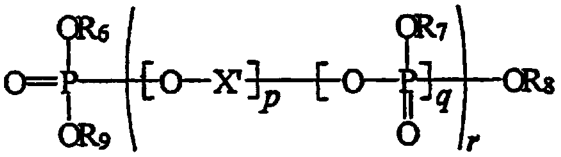

[5]

(wherein each of $R_6$, $R_7$, $R_8$, and $R_9$ represents a hydrogen atom or an organic group (other than the case of $R_6 = R_7 = R_8 = R_9 = H$); X' represents an organic group having a valence of 2 or more; p is 0 or 1; and each of q and r is one or more).

4) A flame retardant for styrene resins according to 2), wherein ammonium polyphosphate (B2) has a phosphorus content of 25-32 wt.%.

5) A flame retardant for styrene resins according to 2), wherein red phosphorus (B3) has a phosphorus content of 75-100 wt.%.

6) A flame retardant for styrene resins according to any one of 1) to 5), wherein the weight ratio of polyamide (A) to the phosphorus-containing flame retardant (B) containing at least a non-halogenated phosphate ester, (A)/(B), is 0.01-5.

7) A flame retardant for styrene resins according to 2), wherein the weight ratio of a non-halogenated phosphate ester (B1) to ammonium polyphosphate (B2), (B1)/(B2), is 0.05-20.

8) A flame retardant for styrene resins according to 2), wherein the weight ratio of a non-halogenated phosphate ester (B1) to red phosphorus (B3), (B1)/(B3), is 0.1-100.

9) A flame retardant for styrene resins according to 2), wherein the phosphorus-containing flame retardant (B) containing at least a non-halogenated phosphate ester is a phosphorus-containing flame retardant comprising a non-halogenated phosphate ester (B1), ammonium polyphosphate (B2), and red phosphorus (B3), and the weight ratio represented by (B1)/{(B2) + (B3)} is 0.05-20.

10) A flame retardant for styrene resins, which comprises a flame retardant for styrene resins as recited in any one of 1) to 8) and at least one species selected from 5- or 6-membered mono-heterocyclic compounds (C) having two or three C-N bonds or C=N bonds in the ring structure.

11) A flame retardant for styrene resins according to 9), wherein the weight ratio of the phosphorus-containing flame retardant (B) containing at least a non-halogenated phosphate ester to at least one species selected from 5- or 6-membered mono-heterocyclic compounds (C) having two or three C-N bonds or C=N bonds in the ring structure, (B)/(C), is 0.1-100.

12) A flame-retardant styrene resin composition which comprises a styrene resin (D) in an amount of 100 parts by weight and a flame retardant for styrene resins as recited in any one of 1) to 11) in an amount of 5-200 parts by

weight.

13) A flame-retardant styrene resin composition which comprises a flame-retardant styrene resin composition as recited in 12) and a fluororesin (E), the fluororesin (E) being incorporated in an amount of 0.001-10 parts by weight based on 100 parts by weight of the styrene resin (D).

14) A flame-retardant styrene resin composition which comprises a flame-retardant styrene resin composition as recited in 12) or 13) and a polyorganosiloxane (F), the polyorganosiloxane (F) being incorporated in an amount of 0.01-10 parts by weight based on 100 parts by weight of the styrene resin (D).

15) A flame-retardant styrene resin composition according to 14), wherein the polyorganosiloxane (F) is a linear-chain or branched-chain organic silicone compound having a skeleton represented by formula [6]:

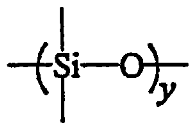

[6]

(wherein y is a number of 2 or more) and an organic group directly connected to Si is at least one group selected from the group consisting of an alkyl group, an alkenyl group, an alkoxy group, a phenyl group, a phenoxy group, an alkyl-substituted phenyl group, an alkyl-substituted phenoxy group, an amino group, a glycidyl group, and a hydroxyalkyl group.

16) A flame-retardant styrene resin composition according to any one of 12) to 15), wherein the styrene resin (D) is at least one species selected from among polystyrene (PS resin), an acrylonitrile-styrene copolymer (AS resin), high-impact polystyrene (HIPS resin), an acrylonitrile-butadiene-styrene copolymer (ABS resin), an acrylonitrile-acrylic rubber-styrene copolymer (AAS resin), an acrylonitrile-ethylene • propylene rubber-styrene copolymer (AES resin), a methyl methacrylate-butadiene-styrene copolymer (MBS resin), a methyl methacrylate-styrene copolymer (MS resin), a methyl methacrylate-acrylonitrile-styrene copolymer (MAS), a styrene-butadiene-styrene copolymer (SBS resin), a hydrogenated product of a styrene-butadiene-styrene copolymer, a styrene-isoprene-styrene copolymer (SIS resin), a hydrogenated product of a styrene-isoprene-styrene copolymer, a styrene-ethylene-butylene-styrene copolymer (SEBS resin), a hydrogenated product of a styrene-ethylene-butylene-styrene copolymer, poly(p-methylstyrene), and acid anhydride-modified products thereof.

17) A flame-retardant styrene resin composition according to any one of 12) to 16), wherein the resin component comprises a polymer alloy containing a styrene resin (D) and polyphenylene ether.

18) A flame-retardant styrene resin composition according to 17), wherein the polyphenylene ether content of the polymer alloy is 1-99 wt.%.

19) A flame-retardant styrene resin composition which comprises a flame-retardant styrene resin composition as recited in any one of 12) to 18) in an amount of 100 parts by weight and inorganic fiber (G) in an amount of 5-40 parts by weight.

20) An apparatus in relation to office automation, wherein the apparatus employs a flame-retardant styrene resin composition as recited in any one of 12) to 19).

Best Modes for Carrying Out the Invention

The polyamide, component (A), which constitutes the flame retardant for styrene resins according to the present invention is a polymer having an snide group serving as an essential recurring unit in a polymer chain. The polyamide is one or more polyamides selected from aliphatic polyamides, aromatic polyamides and so on, and may be a crystalline polyamide or an amorphous polyamide. Specific, non-limiting examples will next be described.

The aliphatic polyamide is a polyamide which is produced by combining at least one saturated aliphatic dicarboxylic acid and at least one aliphatic diamine or produced through ring-opening polymerization of a lactam. Specific examples include nylon-6, nylon-66, nylon-610, nylon-11, nylon-12, and nylon 6/66 copolymers. These polyamides may be used singly or in combination of two or more species. Commercially available aliphatic polyamides may be used.

The aromatic polyamide is a polyamide resin containing an aromatic moiety. Such a polyamide containing an aromatic moiety is a polyamide resin comprising at least one aromatic amino acid or aromatic diamine and/or at least one aromatic dicarboxylic acid. Specific examples include a co-polyamide of p-aminomethylbenzoic acid and ε-caprolactam (nylon AHBA/6), a co-polyamide of terephthalic acid and trimethylhexamethylenediamine (nylon THDT), and Trogamid T (trademark, product of Chemische Werke Hüls A.G.), which are commercially available products. In addition, there may also be used a nucleus-hydrogenated aromatic polyamide in which a portion or the entirety of an aromatic ring of an aromatic monomer is hydrogenated.

No particular limitation is imposed on the composition of the phosphorus-containing flame retardant (B) containing at least a non-halogenated phosphate ester according to the present invention, so long as the flame retardant contains at least one species selected from non-halogenated phosphate esters (B1).

The non-halogenated phosphate ester (B1) refers to an ester which is produced from phosphoric acid and an alcohol or a phenol and contains no halogen other than halogen being present as an impurity. Typically, the phosphate ester is a compound which is produced through dehydration between phosphoric acid and an alcohol or a phenol or dehydrochlorination between phosphoric halide and an alcohol or a phenol. Specific examples include compounds represented by formulas [4] and [5]. In the present invention, at least one species selected from the non-halogenated phosphate esters may arbitrarily be used.

In formula [4], x is 0, 1, or 2; $R_1$ and $R_2$, which may be identical with or different from each other, each represent a hydrogen atom or a C1-C9 alkyl group; and $R_3$, $R_4$, and $R_5$, which may be identical with or different from one other, each represent a hydrogen atom or a C1-C9 alkyl group. In the formula, although the positions of $R_3$, $R_4$, and $R_5$ in the ring are not particularly limited, 2-, 4-, and 6-positions are preferred.

In formula [5], each of $R_1$, $R_2$, $R_3$, and $R_4$ represents a hydrogen atom or an organic group (other than the case of $R_1 = R_2 = R_3 = R_4 = H$); X' represents an organic group having a valence of 2 or more; p is 0 or 1; and each of q and r is an integer of one or more.

Examples of organic groups in formula [5] include an alkyl group, a cycloalkyl group, and an aryl group. The organic groups may be substituted, and examples of substituents include an alkyl group, an alkoxy group, an alkylthio group, an aryl group, an aryloxy group, and an arylthio group. In addition, there may also be used groups obtained by combining these groups (e.g., an arylalkoxyalkyl group) and groups obtained by combining these groups with an oxygen atom, a sulfur atom, or a nitrogen atom (e.g., an arylphosphonylaryl). Examples of organic groups further include an alkylene group, a phenylene group, and an organic group derived from a polynucleus phenol such as a bisphenol. Examples of particularly preferred organic groups include hydroquinone, resorcinol, bisphenol F, bisphenol A, dihydroxydiphenyl, p,p'-dihydroxydiphenyl sulfone, and dihydroxynaphthalene.

Specific examples of non-halogenated phosphate esters include triphenyl phosphate, tricresyl phosphate, trixylenyl phosphate, cresyldiphenyl phosphate, xylenyldiphenyl phosphate, tris(isopropylphenyl) phosphate, tris(o-phenylphenyl) phosphate, tris(p-phenylphenyl) phosphate, trinaphthyl phosphate, di(isopropylphenyl)phenyl phosphate, o-phenylphenyldicresyl phosphate, tris(2,6-dimethylphenyl) phosphate, bis(2,6-dimethylphenyl)phenyl phosphate, bis(2,6-dimethylphenyl)(4-tert-butylphenyl) phosphate, bis(2,6-dimethylphenyl)(4-methylphenyl) phosphate, bis(2,6-dimethylphenyl)(3-methylphenyl) phosphate, bis(2,6-dimethylphenyl)(4-isopropylphenyl) phosphate, bis(2,6-dimethylphenyl)(2-isopropylphenyl) phosphate, and condensates thereof.

Examples of condensates include phosphoric acid (1,3-phenylenetetraphenyl) ester, phosphoric acid (1-methylethylidene)di-4,1-phenylenetetrakis(methylphenyl) ester, poly(oxy(phenoxyphosphinylidene)oxy-1,3-phenylene] α-phenyl-ω-[(diphenoxyphosphinyl)oxy], phosphoric acid 1,3-phenylenetetrakis(2,6-dimethylphenyl) ester, phosphoric acid 1,4-phenylenetetrakis(2,6-dimethylphenyl) ester, and phosphoric acid (1,1'-biphenyl)-4,4'-diyltetrakis(2,6-dimethylphenyl) ester.

In the present invention, examples of preferred nonhalogenated phosphate esters include triphenyl phosphate, tricresyl phosphate, bis(2,6-dimethyl)phenyl phosphate, and condensates thereof. Commercially available products of these esters may also be used.

No particular limitation is imposed on the composition of the phosphorus-containing flame retardant (B) at least containing a non-halogenated phosphate ester (B1). The flame retardant preferably comprises at least one species selected from the non-halogenated phosphate esters (B1) and at least one species selected from ammonium polyphosphates (B2) and red phosphorus (B3) in that the composition provides sufficient flame retardance even a small amount of addition.

Examples of ammonium polyphosphates, component (B2), include ammonium polyphosphate, ammonium carbamylpolyphosphate, melamine-modified ammonium polyphosphate, melamine-coated ammonium polyphosphate, and coated ammonium polyphosphate. Of these, coated ammonium polyphosphate is preferably used.

Coated ammonium polyphosphate refers to ammonium polyphosphate particles coated or micro-encapsulated with a material such as a synthetic resin. In the present invention, a coated ammonium polyphosphate of low water solubility is preferred; i.e., the concentration of ammonium polyphosphate eluted into a filtrate is preferably 0.5 wt.% or less at 25°C and 1 wt.% or less at 50°C, the filtrate being obtained after a 10 wt.% water-suspension slurry of the coated ammonium polyphosphate is stirred and shaken for 24 hours and filtrated.

Any thermosetting or thermoplastic resin may be employed for micro-encapsulation so long as it has low water permeability and forms coating layer having excellent water resistance. Of these, thermosetting resins are preferred in that processing can be carried out simply. Examples of the thermosetting resins include at least one species selected from alkyd resin, allyl resin, urea resin, melamine resin, epoxy resin, phenolic resin, unsaturated polyester resin, silicone resin, urethane resin, xylene resin, furan resin, and modified products thereof. Such a modified product may be ionic-modified products such as anions and cations, particularly modified products such as polycondensed

type. Of these, melamine resin, urea resin, urethane resin, and phenolic resin are preferably used in that these resins have high water resistance and can produce coating layer having high mechanical strength and high denseness.

Among the aforementioned coated ammonium polyphosphates, melamine-coated ammonium polyphosphate; i.e., ammonium polyphosphate particles coated with melamine, is particularly preferably used.

For example, the melamine-coated ammonium polyphosphate is produced through the following method. Specifically, ammonium polyphosphate particles and melamine are placed in a reactor, such as a kneader, equipped with a heating apparatus and a stirring apparatus, and the mixture is stirred with heat for several hours at 250-320°C, at which melamine sublimates and ammonium polyphosphate does not melt, to thereby obtain melamine-coated ammonium polyphosphate.

In the thus-obtained melamine-coated ammonium polyphosphate, coating layer of melamine having an approximately uniform thickness is formed on ammonium polyphosphate particles. At the boundary between the particle surface and the coating layer, substitution reaction between melamine and an ammonia group of ammonium polyphosphate occurs, to thereby provide a chemically bonded state of the particles and the coating layer. Thus, such coated particles are definitely different from a simple mixture of melamine and ammonium polyphosphate, and the water solubility of ammonium polyphosphate decreases remarkably.

In addition, the melamine-coated ammonium polyphosphate is further coated with the above described synthetic resin or micro-encapsulated, to thereby produce modified melamine-coated ammonium polyphosphate, which is also preferably used in the present invention.

Although the theoretical phosphorus content of ammonium polyphosphate is approximately 32 wt.%, the phosphorus content of melamine-coated ammonium polyphosphate varies depending on the thickness of coating layer. In the present invention, the phosphorus content based on the entire weight of ammonium polyphosphate is preferably 25-32 wt.%, more preferably 27-31 wt.%.

When the phosphorus content is in excess of 25 wt.%, the flame retardant of the present invention provides sufficient flame retardance through addition of a small amount thereof to a styrene resin, and the mechanical strength of the molded products obtained from a styrene resin composition incorporating the flame retardant of the present invention is not lowered. Thus, the specified phosphorus content is advantageous.

Examples of commercially available ammonium polyphosphates include Sumisafe PM (trade name, product of Sumitomo Chemical Co., Ltd.), Phoscheck P/30 (trade name, product of Monsanto Co.), Phoecheck P/40 (trade name, product of Monsanto Co.), Terraju C60 (trade name, product of Chisso Corporation), Terraju C70 (trade name, product of Chisso Corporation), Terraju C80 (trade name, product of Chisso Corporation), Hostaflam AP422 (product of Hoechst A.G.), and Hostaflam AP462 (product of Hoechst A.G.). Of these, Terraju C60, Terraju C70, Terraju C80, and Hostaflam AP462 are particularly preferred in view of water resistance as described above.

The red phosphorus which is employed as component (B3) may or may not be surface-treated with an inorganic substance and/or an organic substance (hereinafter the surface-treated red phosphorus is referred to as coated red phosphorus). Particularly, coated red phosphorus is preferably used in view of safety and ease of handling.

Examples of coated red phosphorus products include phosphorus coated with an inorganic compound such as aluminum hydroxide or magnesium hydroxide as disclosed in Japanese Patent Application Laid-Open (*kokai*) No. 59-170176; phosphorus coated with a thermosetting resin as disclosed in Japanese Patent Application Laid-Open (*kokai*) No. 52-125489; and phosphorus coated with an inorganic compound and further coated with a thermosetting resin such as a phenolic resin or a thermoplastic resin such as a styrene resin.

Examples of commercially available products of coated phosphorus include Novared 120 (trade name, product of Rinkagaku Kogyo Co., Ltd.) and Nova Excel 140 (trade name, product of Rinkagaku Kogyo Co., Ltd.).

In the present invention, the higher the content of red phosphorus, the smaller the amount of red phosphorus that must be added so as to attain an excellent effect of flame retardance. On the other hand, red phosphorus is preferably coated with a coating material in view of safety, since red phosphorus is ignitable upon impact. Thus, when red phosphorus is coated, the content of the red phosphorus decreases. In the present invention, the red phosphorus content based on the entire weight of phosphorus is preferably 75 wt.% or more, in view of effect of imparting flame retardance commensurate with the amount of addition.

As already mentioned above, the phosphorus-containing flame retardant (B) containing at least a non-halogenated phosphate ester (B1) according to the present invention is preferably a composition comprising at least one species selected from the non-halogenated phosphate ester (B1) and at least one species selected from among ammonium polyphosphate (B2) and red phosphorus (B3).

When the phosphorus-containing flame retardant (B) containing at least a non-halogenated phosphate ester (B1) contains a non-halogenated phosphate ester (B1) and ammonium polyphosphate (B2), the weight ratio (B1)/(B2) is preferably 0.05-20, more preferably 0.1-10, particularly preferably 0.5-1.5. When the ratio falls within the specified range, excellent flame retardance can be attained in every case.

When the phosphorus-containing flame retardant (B) containing at least a non-halogenated phosphate ester (B1) contains a non-halogenated phosphate ester (B1) and red phosphorus (B3), the weight ratio (B1)/(B3) is preferably

0.1-100, more preferably 0.3-50, particularly preferably 1-10. When the ratio falls within the specified range, excellent flame retardance can be attained in every case.

Furthermore, when the phosphorus-containing flame retardant (B) containing at least a non-halogenated phosphate ester (B1) contains three components in combination; i.e., a non-halogenated phosphate ester (B1), ammonium polyphosphate (B2), and red phosphorus (B3), the weight ratio (B1)/{(B2) + (B3)} is preferably 0.05-20, more preferably 0.1-10, particularly preferably 0.5-1.5. When the ratio falls within the specified range, excellent flame retardance can be attained in every case.

In the flame retardant for styrene resins according to the present invention, the weight ratio of the aforementioned polyamide (A) to the aforementioned phosphorus-containing flame retardant (B) containing at least a non-halogenated phosphate ester, (A)/(B), is preferably 0.01-5, more preferably 0.1-2. When the ratio falls within the specified range, excellent flame retardance can be attained.

Into the flame retardant for styrene resins according to the present invention, at least one species selected from 5- or 6-membered mono-heterocyclic compounds (C) having two or three C-N bonds or C=N bonds in the ring structure may be incorporated in addition to the aforementioned components (A) and (B).

Examples of mono-heterocyclic compounds include monomers or polymers having an imidazole ring, a pyrazole ring, an imidazolidine ring, a pyrazolidine ring, an imidazoline ring, a pyrazoline ring, a piperazine ring, or a triazine ring and (iso)cyanuric acid derivatives. Of these, compounds having an imidazolidine ring or a triazine ring and (iso)cyanuric acid derivatives are preferred.

Examples of compounds having an imidazolidine ring include a polymer which is obtained through reaction with heat of ethylene urea or ethylene thiourea and formaldehyde at a mol ratio of 1 : 1 to 1 : 2. Examples of particularly preferred compounds having a triazine ring include 1,3,5-triazine compounds. Specific examples include homopolymers and/or copolymers of 2-piperazinylene-4-morpholino-1,3,5-triazine, 2-piperazinylene-4-piperidino-1,3,5-triazine, 2-piperazinylene-4-N,N-bis(hydroxyethyl)amino-1,3,5-triazine, and/or 2-piperazinylene-4-N-hydroxyethylamino-1,3,5-triazine and reaction products of cyanuric chloride and diamine. Among the reaction products of cyanuric chloride and diamine, most preferred are products obtained through reaction of cyanuric chloride and diamine at a mol ratio of 2 : 3 to 1 : 3. Specific examples include reaction products of cyanuric chloride and ethylenediamine and reaction products of cyanuric chloride and 1,3-diaminopropane. In addition, polymers obtained through methylolation of the 1,3,5-triazine derivatives with formaldehyde and successive polycondensation may also be used in the present invention.

The aforementioned homopolymers having a monomer unit of 2-piperazinylene-4-morpholino-1,3,5-triazine can be obtained through the following steps: reacting with heat 2,6-dihalo-4-morpholino-1,3,5-trazine (e.g., 2,6-dichloro-4-morpholino-1,3,5-trazine or 2,6-dibromo-4-morpholino-1,3,5-trazine) with piperazine at an equimol ratio in an inert solvent such as xylene in the presence of an organic or inorganic base (e.g., triethylamine, tributylamine, sodium hydroxide, potassium hydroxide, or sodium carbonate); separating solid matter through filtration of the reaction products after completion of reaction; washing the solid matter with hot water to thereby remove a by-produced salt; and drying the washed solid matter.

In order to produce a reaction product of cyanuric chloride and ethylenediamine, cyanuric chloride is reacted with ethylenediamine at a mol ratio of 2 : 3 in water, an organic solvent, or a mixture thereof as a solvent in the presence of an organic or inorganic base (e.g., triethylamine, tributylamine, ethylenediamine, sodium hydroxide, potassium hydroxide, or sodium carbonate). The reaction is initiated at 10°C or lower and the temperature is gradually elevated to 100-120°C. After completion of reaction, solid matter is separated through filtration of the reaction products and the solid matter is washed with boiling water, to thereby remove a by-produced salt. Subsequently, the washed solid matter is dried, to thereby obtain a reaction product of cyanuric chloride and ethylenediamine.

In addition to the aforementioned 1,3,5-triazine compounds, examples of other 1,3,5-triazine compounds which may also be used in the present invention include melamine, acetoguanamine, benzoguanamine, succinylguanamine, 3,9-bis[2-(3,5-diamino-2,4,6-triazaphenyl)ethyl]-2,4,8,10-tetraoxaspiro[5.5]undecane, 2,4-diamino-6-[2'-methylimidazolyl-(1')]-ethyl-1,3,5-triazine, 2,4-diamino-6-[2'-ethylimidazolyl-(1')]-ethyl-1,3,5-triazine, 2,4-diamino-6-[2'-propylimidazolyl-(1')]-ethyl-1,3,5-triazine, 2,4-diamino-6-[2'-butylimidazolyl-(1')]-ethyl-1,3,5-triazine, 2,4-diamino-6-[2'-pentylimidazolyl-(1')]-ethyl-1,3,5-triazine, 2,4-diamino-6-[2'-hexylimidazolyl-(1')]-ethyl-1,3,5-triazine, 2,4-diamino-6-[2'-heptylimidazolyl-(1')]-ethyl-1,3,5-triazine 2,4-diamino-6-[2'-octylimidazolyl-(1')]-ethyl-1,3,5-triazine, 2,4-diamino-6-[2'-nonylimidazolyl-(1')]-ethyl-1,3,5-triazine 2,4-diamino-6-[2'-decylimidazolyl-(1')]-ethyl-1,3,5-triazine, 2,4-diamino-6-[2'-undecylimidazolyl-(1')]-ethyl-1,3,5-triazine, 2,4-diamino-6-[2'-phenylimidazolyl-(1')]-ethyl-1,3,5-triazine, 2,4-diamino-6-[2'-ethyl-4'-methylimidazolyl-(1')]-ethyl-1,3,5-triazine, 2,4-diamino-6-[2'-phenyl-4'-methylimidazolyl-(1')]-ethyl-1,3,5-triazine, and 2,4-diamino-6-[2'-undecyl-4'-methylimidazolyl-(1')]-ethyl-l,3,5-triazine

The component C of the present invention may also include melamine-formaldehyde resins; melamine condensates; inorganic salts of melamine such as melamine phosphate, melamine pyrophosphate, melamine sulfate, and melamine borate; and melamine derivatives such as melamine cyanurate.

The melamine condensates are condensates which are obtained through, for example, removal of ammonia from melamine, such as melam, melem, and melon. Commercially available products may also be employed.

Examples of (iso)cyanuric acid derivatives include compounds represented by formula [7]:

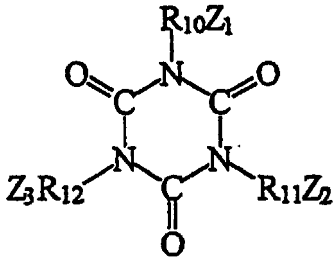

[7]

wherein $R_{10}$, $R_{11}$, and $R_{12}$, which may be identical with or different from one another, each represent hydrogen or a C1-C6 linear-chain or branched-chain alkylene group and each of $Z_1$, $Z_2$, and $Z_3$ represents a hydroxyl group, an amino group, an epoxy group, or a similar group.

Examples of the above compounds include tris(hydroxyethyl) isocyanurate, tris(2-hydroxyethyl) isocyanurate, tris(3-hydroxy-n-propyl) isocyanurate, triglycidyl isocyanurate, and condensates thereof.

The aforementioned mono-heterocyclic compounds included in component (C) may be used singly or in combination of two or more species. Among the mono-heterocyclic compounds, melamine, melamine-formaldehyde resin, melamine phosphate, and melamine cyanurate are particularly preferred.

The mixing ratio of the phosphorus-containing flame retardant according to the present invention to component (C), (B)/(C) in weight, is 0.1-100, preferably 1-20. When the ratio is in excess of 100, the mechanical strength of a resin into which the flame retardant is incorporated may decrease.

The flame-retardant styrene resin composition according to the present invention comprises a styrene resin (D) in an amount of 100 parts by weight and the flame retardant for styrene resins according to the present invention in an amount of 5-200 parts by weight, preferably 20-100 parts by weight.

When the amount of the flame retardant is less than 5 parts by weight, sufficient flame retardance is difficult to attain, whereas when the amount is in excess of 200 parts by weight, the mechanical strength of a resin product may decrease.

Furthermore, a fluororesin (E) is preferably incorporated into the flame-retardant styrene resin composition according to the present invention. The fluororesin (E) is incorporated preferably in an amount of 0.001-10 parts by weight, more preferably 0.01-5 parts by weight based on 100 parts by weight of the styrene resin (D).

When the amount is less than 0.001 parts by weight, resistance to dripping during burning and water resistance and moisture resistance of a molded product may be poor, whereas when the amount is in excess of 10 parts by weight, a molded product may have unsatisfactory appearance.

The fluororesin (E) is a resin which has a fluorine atom therein, Specific examples include poly(monofluoroethylene), poly(difluoroethylene), poly(trifluoroethylene), poly(tetrafluoroethylene), a tetrafluoroethylene/perfluoroalkylvinyl ether copolymer, a tetrafluoroethylene/ethylene copolymer, and a tetrafluoroethylene/hexafluoropropylene copolymer. These polymers may be used singly or in combination of two or more species. The form of the fluororesin is not particularly limited, and may be emulsion, suspension, microfibril, or powder. In the present invention, poly(tetrafluoroethylene) is preferably used.

When melt-kneading of the flame-retardant styrene resin composition of the present invention with the fluororesin is carried out through a multi-step granulation method, favorable dispersibility is attained. Specifically, an extruder having a plurality of feed throats is employed, and the temperature of a plurality of the melt-kneading portions is predetermined, indivisually. The fluororesin and a resin component contained in the flame-retardant styrene resin composition of the present invention are fed through a first feed throat, and the mixture is melt-kneaded at a temperature higher than the melting temperature of the employed fluororesin. Components other than the resin component of the resin composition are fed through a subsequent throat. When the remaining components are fed into the mixture, melt-kneading is carried out at 230-260°C.

Alternatively, similarly-high dispersibility can be attained when powdered fluororesin is employed and the resin is kneaded with other components at a temperature at which the powdered fluororesin does not melt.

Commercial products *per se* may be employed as the aforementioned fluororesins. Examples of commercially available fluororesins include Aflon PFA (trademark, product of Asahi Glass Co., Ltd.), Fluon PTFE (trademark, product of Asahi Glass Co., Ltd.), Polyflon TFE (trademark, product of Daikin Industries, Ltd.), Neoflon CTFE (trademark, product of Daikin Industries, Ltd.), Hostaflon TF (trademark, product of Hoechst Japan Ltd.), Teflon TFE (trademark, product of Du-Pont Mitsui Fluorochemicals Co., Ltd.), Teflon PFA (trademark, product of Du-Pont Mitsui Fluorochemicals Co., Ltd.), Teflon FEP (trademark, product of Du-Pont Mitsui Fluorochemicals Co., Ltd.), and Algoflon

PTFE (trademark, product of Montecatini K.K.).

These fluororesins may also be produced through the following method, which is not particularly limited and is already known. Specifically, tetrafluoroethylene is polymerized in an aqueous medium by use of a radical initiator such as ammonium persulfate or potassium persulfate at 7-80 kg/cm$^2$ and 0-200°C. The resultant suspension, dispersion, or emulsion is subjected to flocculation or solid-liquid separation, to thereby yield polytetrafluoroethylene powder.

Preferably, a polyorganosiloxane (F) is incorporated into the flame-retardant styrene resin composition of the present invention. The polyorganosiloxane (F) is incorporated in preferably an amount of 0.01-10 parts by weight based on 100 parts by weight of the styrene resin (D), more preferably 0.1-5 parts by weight. When the component (F) is incorporated in an amount in excess of 10 parts by weight, an effect for preventing lowering of impact resistance is poor, whereas when the amount is less than 0.01 part by weight, a flame-retardant effect due to addition of the component (F) is hardly enhanced.

The polyorganosiloxane serving as the component (F) preferably has in its molecule a skeleton represented by formula [8]:

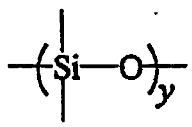

[8]

(wherein y is 2 or more). The structure of the polyorganosiloxane is not particularly limited, and it may be linear-chain or cross-linked. Examples of employable organic groups directly connected to a silicon atom contained in the skeleton include at least one group selected from the group consisting of a C1-C8 alkyl group, a C2-C8 alkenyl group, a C1-C6 alkoxy group, a phenyl group, a phenoxy group, a C1-C4 alkyl-substituted phenyl group, a C1-C4 alkyl-substituted phenoxy group, an amino group, a glycidyl group, and a C1-C6 hydroxyalkyl group.

In addition, known modified polyorganosiloxanes in which a portion of organic groups are substituted by a reactive group such as a hydroxyl group or hydrogen may also be employed. Such a reactive group may be contained in an amount of at least one per molecule of polyorganosiloxane, and no particular limitation is imposed on the position of the reactive group in the polyorganosiloxane structure.

The form of the polyorganosiloxane is not particularly limited, and oily, varnish-like, gummy, and resinous polyorganosiloxane may be employed.

Examples of polyorganosiloxanes which are preferably employed include polydimethylsiloxane, polymethylphenylsiloxane, amino-modified silicone, and epoxy-modified silicone. Examples of commercially available polyorganosiloxanes include Polydimethylsiloxane SH-200 (trade name, product of Dow Corning Toray Silicone Co., Ltd.), Polydimethylsiloxane KF96 Series (trade name, product of Shin-Etsu Chemical Co., Ltd.), Epoxy-modified polysilsesquioxane DC4-7051 (trade name, product of Dow Corning Toray Silicone Co., Ltd.), and Methacryl-group-modified polysilsesquioxane DC4-7081 (trade name, product of Dow Corning Toray Silicone Co., Ltd.).

The styrene resin serving as component (D) of the present invention is a thermoplastic polymer having an aromatic vinyl monomer. Examples include polystyrene (PS resin), an acrylonitrile-styrene copolymer (AS resin), high-impact polystyrene (HIPS resin), an acrylonitrile-butadiene-styrene copolymer (ABS resin), an acrylonitrile-acrylic rubber-styrene copolymer (AAS resin), an acrylonitrile-ethylene • propylene rubber-styrene copolymer (AES resin), a methyl methacrylate-butadiene-styrene copolymer (MBS resin), a methyl methacrylate-styrene copolymer (MS resin), a methyl methacrylate-acrylonitrile-styrene copolymer (MAS), (SBS resin), a hydrogenated product of a styrene-butadiene-styrene copolymer, (SIS resin), a hydrogenated product of a styrene-isoprene-styrene copolymer, a styrene-ethylene-butylene-styrene copolymer (SEBS resin), a hydrogenated product of a styrene-ethylene-butylene-styrene copolymer, poly(p-methylstyrene), and acid anhydride-modified products thereof.

Of these, polystyrene, high-impact polystyrene, an acrylonitrile-butadiene-styrene copolymer, and an acrylonitrile-ethylene • propylene rubber-styrene copolymer are preferred.

The high-impact polystyrene is a resin comprising a matrix formed of an aromatic vinyl polymer in which particles of rubber-like polymer are dispersed. The HIPS resin is typically produced by blending an aromatic vinyl polymer and a rubber-like polymer. However, in some cases, the HIPS resin may be produced through graft polymerization of a mixture comprising an aromatic vinyl monomer and a monomer which can be polymerized with the vinyl monomer in the presence of a rubber-like polymer.

Examples of rubber-like polymers which are incorporated into high-impact polystyrene include diene rubbers such as polybutadiene, poly(styrene-butadiene), and poly(acrylonitrile-butadiene); saturated rubbers which are obtained by hydrogenating the aforementioned diene rubbers; isoprene; chloroprene; acrylic rubbers such as poly(butyl

acrylate); and ethylene-propylene-diene monomer terpolymers (EPDM).

Examples of the aromatic vinyl monomer which is essentially contained in the graft-polymerizable monomer mixture include styrene and ring-alkyl-substituted styrenes such as o-methylstyrene, m-methylstyrene, p-methylstyrene, 2,4-dimethylstyrene, ethylstyrene, and p-tert-butylstyrene. These monomers may be used in combination of two or more species.

Examples of vinyl monomers which serve as a component of styrene resin and can be polymerized with the aromatic vinyl monomer include α,β-unsaturated carboxylic acid esters such as butyl acrylate, 2-ethylhexyl acrylate, isobutyl acrylate, and methyl methacrylate; α,β-unsaturated carboxylic acids such as methacrylic acid and acrylic acid; α,β-unsaturated carboxylic anhydrides such as maleic anhydride; unsaturated nitrile monomers such as acrylonitrile, methacrylonitrile, and fumaronitrile; and maleimide monomers such as N-phenylmaleimide.

On the styrene resins serving as the component (D) of the present invention, acid- or acid-anhydride-modified styrene elastomers are preferably employed, in view of enhancement of impact strength.

Modification of styrene elastomers with an acid or an acid anhydride can be carried out through a known method; e.g., graft or random copolymerization of an acid or an acid anhydride to a styrene elastomer.

More specifically, in the case of graft polymerization, a styrene elastomer, an acid or acid anhydride, and an optionally employed typical radical polymerization catalyst such as benzoyl peroxide, lauryl peroxide, peroxybenzoic acid, or peroxyacetic acid are placed into an apparatus such as a twin screw kneader, and the mixture is melt-kneaded at approximately 150-350°C. Although the amount of the added acid or anhydride is not particularly limited, the acid or anhydride is preferably added in an amount of 0.1-10 parts by weight, more preferably 0.5-7 parts by weight, based on 100 parts by weight of the styrene elastomer in order to attain sufficient effect of addition of the styrene elastomer.

Unsaturated carboxylic acids and anhydrides thereof may be used as the acids or anhydrides. Specific examples include monocarboxylic acids such as acrylic acid and methacrylic acid; dicarboxylic acids such as maleic acid, fumaric acid, itaconic acid, and endo-bicyclo-5-heptene-2,3-dicarboxylic acid; and acid anhydrides such as maleic anhydride, fumaric anhydride, itaconic anhydride, and endo-bicyclo-5-heptene-2,3-dicarboxylic anhydride. Of these, maleic anhydride is particularly preferred.

The resin component contained in the flame-retardant styrene resin composition of the present invention may be a polymer alloy comprising a styrene resin (D) and polyphenylene ether.

No particular limitation is imposed on the species of the polyphenylene ethers which can be used in the present invention. However, preferred is a polymer or a complex species thereof which is produced through oxidation-polymerization or oxidation-copolymerization by use of oxygen or an oxygen-containing gas of at least one phenolic compound as represented by formula [9]:

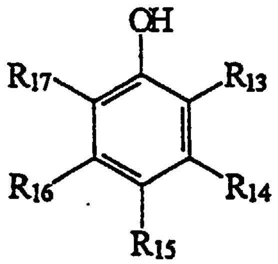

[9]

(wherein $R_{13}$, $R_{14}$, $R_{15}$, $R_{16}$, and $R_{17}$, which may be identical with or different from one another, each represent a group selected from the group consisting of hydrogen, fluorine, and a hydrocarbon or substituted hydrocarbon group such as methyl, ethyl, n- or iso-propyl, prim-, sec-, or t-butyl, phenylethyl, benzyl, hydroxymethyl, carboxyethyl, methoxycarbonylethyl, cyanoethyl, phenyl, methylphenyl, dimethylphenyl, ethylphenyl, or allyl).

Specific examples of such polyphenylene ethers include poly(2,6-dimethyl-1,4-phenylene) ether, poly(2,6-diethyl-1,4-phenylene) ether, poly(2,6-dipropyl-1,4-phenylene) ether, poly(2-methyl-6-ethyl-1,4-phenylene) ether, poly(2-methyl-6-propyl-1,4-phenylene) ether, poly(2-ethyl-6-propyl-1,4-phenylene) ether, a copolymer of 2,6-dimethyl-1,4-phenylene ether and 2,3,6-trimethyl-1,4-phenylene ether, and a copolymer of 2,6-diethyl-1,4-phenylene ether and 2,3,6-trimethyl-1,4-phenylene ether.

In addition, there may also be employed a modified polyphenylene ether which is produced through copolymerization or mixing of a phenolic compound represented by formula [9] and a phenolic compound other than that represented by formula [9], e.g., a polyhydroxy aromatic compound such as resorcin; hydroquinone; a phenol novolak resin; or a bisphenol such as bisphenol A, tetrafluorophenol A, bisphenol S, or bisphenol F. In this case, however, the polyhydroxy aromatic compound is added in an amount of 20 wt.% or less based on the entire amount of the polyphenylene ether resin.

When the amount of the polyhydroxy aromatic compound is in excess of 20 wt.%, physical properties such as hardness and tensile strength which the polyphenylene ether resin *per se* possesses may be impaired.

Among the phenolic compounds, preferred are poly(2,6-dimethylphenol), poly(2,6-diphenylphenol), a 2,6-xylenol-2,3,6-trimethylphenol copolymer, and a 2,6-dimethylphenol-bisphenol A (10%) copolymer.

The amount of polyphenylene ether incorporated into a polymer alloy comprising a styrene resin (D) and polyphenylene ether is preferably 1-99 wt.% based in the weight of the polymer alloy, more preferably 20-80 wt.%.

The resin component contained in the flame-retardant styrene resin composition of the present invention may be a polymer alloy comprising a styrene resin (D) and a polycarbonate resin or a polymer alloy comprising a styrene resin (D), a polycarbonate resin, and polyphenylene ether.

A known thermoplastic aromatic polycarbonate may be employed as the polycarbonate resin. Of these, preferred is an aromatic polycarbonate which is obtained through reaction between a dihydric phenolic compound and phosgene or a carbonate diester.

Examples of the aforementioned dihydric phenolic compounds include bisphenols. Specific examples include 2,2-bis(4-hydroxyphenyl)propane, i.e., bisphenol A, hydroquinone, 4,4-dihydroxydiphenyl, bis(4-hydroxyphenyl) sulfide, and bis(4-hydroxyphenyl) ketone.

These dihydric phenolic compounds may be used as a monomer species, a homopolymer thereof, a copolymer of two or more species, or a mixture thereof.

The aforementioned styrene resin and the polycarbonate resin can be mixed at an arbitrary ratio. Typically the styrene resin and the polycarbonate resin are mixed at a ratio of 5-95 parts by weight/95-5 parts by weight.

Into the flame-retardant styrene resin composition of the present invention, at least one species selected from inorganic fiber (G) is preferably incorporated. Examples of inorganic fiber species (G) include wollastonite, dawsonite, glass fiber, rock wool, gypsum fiber, metallic whiskers, potassium titanate whiskers, carbon fiber, boron fiber, silicon carbide fiber, and alumina fiber. Of these, wollastonite, glass fiber, and rock wool are preferred.

An inorganic fiber which is surface-treated with a coupling agent such as a silane coupling agent or a titanium coupling agent, a surfactant, or a similar agent is preferably employed as the above inorganic fiber.

The inorganic fiber is preferably incorporated into 100 parts by weight of the entire aforementioned flame-retardant styrene resin composition in an amount of 5-40 parts by weight, more preferably 15-30 parts by weight.

When the amount is less than 5 parts by weight, an effect of the inorganic fiber on enhancement of mechanical strength of the flame-retardant resin composition is hardly observed, whereas when the amount is in excess of 40 parts by weight, flame retardance may be impaired.

In the present invention, a compatibilizer is preferably added so as to enhance the compatibility between the styrene resin (D) and the polyamide resin (A). A reactive compatibilizer having a maleic anhydride unit, a glutaric anhydride unit, a carboxylic acid unit, or a carboxamide unit can be used in the present invention. Specific examples include a styrene-maleic anhydride copolymer, a styrene-methacrylamide copolymer, a styrene-methacrylic acid copolymer, a styrene-methyl methacrylate-maleic anhydride copolymer, and maleic anhydride-grafted polystyrene.

Into the flame-retardant styrene resin composition of the present invention, a typically known flame retardant may be incorporated within the scope of the present invention so long as the effect of the invention is not impaired. Examples of flame retardants include metal hydrates such as aluminum hydroxide and magnesium hydroxide; metal oxides such as magnesium oxide, aluminum oxide, and zirconium oxide; sulfates such as ammonium sulfate and guanidinium sulfate; and expandable substances such as thermally expandable graphite and zinc borate.

In addition, a variety of stabilizers may be added into the flame-retardant styrene resin composition during processing of the resin. Examples of stabilizers include anti-oxidants such as hindered phenol; UV-absorbers; tin-containing thermal stabilizers; lubricants such as stearin and zinc stearate; fillers; reinforcing agents such as talc and mica; and colorants such as a dye and a pigment.

The flame-retardant styrene resin composition of the present invention may be produced through the following method. Specifically, a styrene resin (D) and the flame retardant for styrene resins according to the present invention are placed into a stirring-mixing apparatus such as a Hensehel mixer (trade name), a super mixer, or a tumbler mixer, and the mixture is stirred for 1-5 minutes. The resultant mixture is placed in a roll kneader and a screw-type extruder, or a vent-type extruder if required, and melt-kneaded at 220-260°C, to thereby pelletize the mixture. Thus, the target flame-retardant composition is obtained. During production, another kind of flame retardant component may be added to the polyamide (A), to thereby prepare a flame-retardant master batch, which may be added to the styrene resin (D).

No particular limitation is imposed on the use of the flame-retardant styrene resin composition of the present invention. Since molded products obtained from the resin composition exhibit excellent flame retardance and impact strength, the products are suitably used as materials for household electrical appliances, office automation equipment (OA equipment), and parts of automobiles and rolling stock. Particularly, the products are preferably used in a housing or chassis of a piece of office automation equipment such as a personal computer or a printer.

The present invention will next be described more specifically by way of Examples and Comparative Examples, which should not be construed as limiting the invention thereto. In Examples and Comparative Examples, flammability and impact strength were evaluated according to the following methods.

Flammability Evaluation Method A

The title evaluation was carried out in accordance with the vertical burning test defined by "burning test of plastic materials available as parts of apparatus" under UL Subject 94 (Underwriters' Laboratories Incorporated). The thicknesses of test pieces were 1.6 mm (1/16 inch) and/or 0.8 mm (1/32 inch).

Flammability Evaluation Method B

The title evaluation was carried out on the basis of the "oxygen index" as defined in Japanese Industrial Standard JIS K7201 (Testing method for flammability of polymeric materials using the oxygen index method).
(3) The impact resistance test was carried out in accordance with ASTM D256.
The materials used in Examples and Comparative Examples will next be described.

(A) Polyamides

A-1 Crystalline nylon (nylon-6): Ube Nylon 1013B (trade mark, product of Ube Industries, Ltd.)
A-2 Amorphous nylon: Trogamid T5000 (trademark, product of Daicel Hüls Ltd.)

(B1) Non-halogenated phosphoric esters

B1-1 Triphenyl phosphate: TPP (product of Chisso Corporation)
B1-2 Condensed phosphate ester: CR-733S (trade name, product of Daihachi Chemical Industry Co., Ltd.)

(B2) Ammonium polyphosphates

B2-1 Coated ammonium polyphosphate: Terraju C60 (trade name, product of Chisso Corporation), phosphorus content = 28 ± 1 wt.%

(B3) Red phosphorus

B3-1 Coated red phosphorus: Nova Excel 140 (trade name, product of Rinkagaku Kogyo Co., Ltd.), phosphorus content 92 wt.%

(C) Five or six-membered mono-heterocyclic compounds having C-N bond or C=N bond as many as two or three in the cyclic structure

C-1 Melamine cyanurate: MC-440 (trade name, product of Nissan Chemical Industries, Ltd.)
C-2 Tris(2-hydroxyethyl)isocyanurate: TANAC (trade name, product of Nissan Chemical Industries, Ltd.)
C-3 Melamine resin: Eposter S12 (trade name, product of Nippon Shokubai Kagaku Kogyo Co., Ltd.)
C-4 Benzoguanamine resin: Eposter MS (trade name, product of Nippon Shokubai Kagaku Kogyo Co., Ltd.)
C-5 Melamine: (first class grade reagent, product of Wako Pure Chemical Industries, Ltd.)

(D) Styrene resins

D-1 HIPS (high-impact polystyrene): R63 (trade name, product of Daicel Chem. Ind., Ltd.)
D-2 Maleic acid-modified polystyrene: Dylark (trade name, product of Sekisui Chem. Co., Ltd.)
D-3 ABS resin: Stylac ABS-101 (trade name, product of Asahi Chemical Industry Co., Ltd.)
D-4 Polyphenylene ether resin (PPE): Noryl 534 (trade name, product of Nihon GE Plastic)
D-5 Hydrogenated styrene-butadiene rubber (hydrogenated SBS rubber): Tuftec H1041 (trade name, product of Asahi chemical Industry Co., Ltd.)
D-6 Maleic acid-modified hydrogenated styrene-butadiene rubber (maleic acid-modified hydrogenated SBS rubber): Tuftec M1911 (trade name, product of Asahi Chemical Industry Co., Ltd.)

(E) Fluororesin

E-1 PTEF (polytetrafluoroethylene): Teflon 6J (trademark, product of Du Pont-Mitsui Fluorochemicals Co., Ltd.)

(F) Polyorganosiloxanes

F-1 Polysilsesquioxane: DC4-7051 (trade name, product of Dow Corning Toray Silicone, Co., Ltd.)
F-2 Polysilsesquioxane: DC4-7081 (trade name, product of Dow Corning Toray Silicone, Co., Ltd.)

(G) Inorganic fiber

G-1 Glass fiber: GE Milled Fiber 140M

Examples 1 through 8 and Comparative Examples 1 through 4

Components (A) to (C) were placed in a Henechel mixer (trade name, Mitsui Miike Seisakusho) at compositional proportions shown in the following Tables 1, 2, and 3, and mixed by stirring for two minutes, to thereby obtain a flame retardant for styrene resins falling within the scope of the present invention. In addition, components (D), (F), and (G) were added into the same Henschel mixer at compositional proportions shown in the following Tables 1, 2, and 3, and the resultant mixture was mixed by stirring for three minutes, to thereby obtain a mixture. After the mixture was kneaded at a melt-kneading temperature of 250°C by means of a twin screw extruder (PCM-30, IKEGAI TEKKOSHO), the mixture was extruded into strands and cut into pellets, to thereby obtain a flame-retardant styrene resin composition falling within the scope of the present invention.

The pellets were dried at 80°C for eight hours and molded at a molding temperature of 240°C by means of an injection molding machine (J28SC, product of NIHON SEIKO), to thereby obtain the predetermined test pieces. The test pieces were subjected to tests for evaluating properties. The results are shown in Tables 1, 2, and 3.

Table 1

| | Example 1 | Example 2 | Example 3 | Example 4 | Example 5 |
|---|---|---|---|---|---|
| A-1 | 30 | 7 | 4 | 28 | 15 |
| B1-1 | 10 | 4 | | 2 | 4 |
| B1-2 | | 4 | 12 | | 8 |
| B2-1 | 20 | 12 | 12 | 10 | |
| B3-1 | | 2 | | 3 | 2 |
| C-1 | | | | 6 | |

Table 1 (continued)

| | Example 1 | Example 2 | Example 3 | Example 4 | Example 5 |
|---|---|---|---|---|---|
| C-2 | | | | 3 | |
| D-1 | 40 | 44 | 42 | | 47 |
| D-2 | | 4 | | | |
| D-3 | | | | 28 | |
| D-4 | | 12 | 28 | | 16 |
| D-5 | | 10 | | | 8 |
| D-6 | | | | | |
| F-1 | | 1 | | | |
| F-2 | | | 2 | | |
| G-1 | | | | 20 | |
| Burning resistance A (1.6 mm$^t$) | V-0 | V-0 | V-0 | V-0 | V-0 |
| Flammability B | 32.0 | 33.2 | 31.0 | 38.0 | 31.2 |
| IZOD (notch) (kJ/m$^2$) | 5.0 | 15.5 | 5.6 | 16.0 | 14.5 |

Table 2

| | Example 6 | Example 7 | Example 8 | Comp. Ex. 1 | Comp. Ex. 2 |
|---|---|---|---|---|---|
| A-1 | 8 | 7 | 23 | 30 | 38.5 |
| B1-1 | 8 | 3.5 | 4 | | |
| B1-2 | | 3.5 | | | |
| B2-1 | 8 | 20 | 11 | 30 | 11.5 |
| B3-1 | 2 | | 4 | | |
| C-1 | 2 | | 4 | | 11.5 |
| C-2 | | | | | |
| D-1 | 54 | 34 | | 40 | 38.5 |
| D-2 | 2 | 5 | 4 | | |
| D-3 | | | 49 | | |
| D-4 | | 16 | | | |
| D-5 | 8 | 7 | | | |
| D-6 | 8 | 3 | | | |
| F-1 | | 1 | | | |
| F-2 | | | 1 | | |
| G-1 | | | | | |
| Burning resistance A (1.6 mm$^t$) | V-0 | V-0 | V-0 | V-0 | flaming |
| Flammability B | 31.8 | 31.5 | 32.8 | 39.0 | 28.0 |
| IZOD (notch) (kJ/m$^2$) | 22.8 | 11.2 | 15.4 | 1.7 | 4.3 |

Table 3

| | Comp. Ex. 3 | Comp. Ex. 4 |
|---|---|---|
| A-1 | | 10 |
| B1-1 | 8 | |
| B1-2 | | |
| B2-1 | 8 | |
| B3-1 | 2 | 2 |
| C-1 | 2 | |
| C-2 | | |
| D-1 | 62 | 70 |
| D-2 | 2 | |
| D-3 | | |
| D-4 | | 17 |
| D-5 | 8 | |
| D-6 | 8 | |
| F-1 | | |
| F-2 | | 1 |
| G-1 | | |
| Burning resistance A (1.6 $mm^t$) | V-2 | flaming |
| Flammability B | 26.5 | 25.8 |
| IZOD (notch) ($kJ/m^2$) | 15.0 | 4.0 |

Examples 9 through 18 and Comparative Examples 5 and 6

In Examples 9 through 18 and Comparative Examples 5 and 6, a twin screw extruder which had been remodeled from PCM-45 (product of IKEGAI TEKKOSHO) was used in order to melt-knead a resin and a flame-retardant composition for styrene resins falling within the scope of the present invention. The remodeled twin screw extruder was installed with an additional hopper (a second hopper) provided between an inlet hopper (a first hopper) and an outlet of PCM-45.

Components (A), (D), and (E) were placed in a tumbler mixer (trade name, product of MORITA SEIKI KOGYO) at the compositional proportions shown in the following Tables 4, 5, and 6, and mixed by stirring for five minutes. The mixture was placed into the extruder from the first hopper and kneaded at a melt-kneading temperature of 320°C. In contrast, components (B), (C), and (G) were placed into a Henschel mixer (trade name, product of Mitsui Miike Seisakusho) at the compositional proportions shown in the following Tables 4, 5, and 6, and mixed by stirring for three minutes. The mixture was added into the extruder from the second hopper and kneaded at a melt-kneading temperature of 250°C. The resultant mixture was extruded into strands and cut into pellets, to thereby obtain a flame-retardant styrene resin composition falling within the scope of the present invention.

The pellets were dried at 80°C for eight hours and molded at a molding temperature of 240°C by means of an injection molding machine (J28SC, product of NIHON SEIKO), to thereby obtain the predetermined test pieces. The test pieces were subjected to tests for evaluating properties. The results are shown in Tables 4, 5, and 6.

Table 4

| | Example 9 | Example 10 | Example 11 | Example 12 | Example 13 |
|---|---|---|---|---|---|
| A-1 | 40 | 30 | 25 | 25 | 40 |

Table 4 (continued)

| | Example 9 | Example 10 | Example 11 | Example 12 | Example 13 |
|---|---|---|---|---|---|
| B1-1 | 5 | 10 | 3 | | 30 |
| B1-2 | | | | 3 | |
| B2-1 | 25 | 20 | 30 | 25 | 30 |
| C-3 | | 10 | | | 10 |
| C-4 | | | | 5 | |
| D-1 | 60 | 70 | 75 | 75 | 60 |
| D-3 | | | | | |
| E-1 | 0.1 | 0.1 | 0.1 | 0.1 | 1 |
| G-1 | | | | | |
| Burning resistance A (1.6 $mm^t$) | V-0 | V-0 | V-0 | V-0 | V-0 |
| Burning resistance A (0.8 $mm^t$) | V-1 | V-1 | V-1 | V-1 | V-1 |
| Flammability B | 40 | 42 | 38 | 38 | 44 |
| IZOD (notch) ($kJ/m^2$) | 7.4 | 7.9 | 5.9 | 6.2 | 7.5 |

Table 5

| | Example 14 | Example 15 | Example 16 | Example 17 | Example 18 |
|---|---|---|---|---|---|
| A-1 | 30 | 50 | 30 | 40 | 35 |
| B1-1 | 10 | | 1 | 10 | |
| B1-2 | | 5 | | | 3 |
| B2-1 | 20 | 50 | 15 | 25 | 30 |
| C-3 | | | 15 | | 7 |
| C-4 | | | | | |
| D-1 | 70 | 50 | 70 | | |
| D-3 | | | | 60 | 65 |
| E-1 | 0.05 | 0.05 | 0.1 | 0.05 | 0.05 |
| G-1 | 30 | 30 | | | |
| Burning resistance A (1.6 $mm^t$) | V-0 | V-0 | V-0 | V-0 | V-0 |
| Burning resistance A (0.8 $mm^t$) | V-0 | V-0 | V-1 | V-1 | V-1 |
| Flammability B | 38 | 43 | 36 | 41 | 41 |
| IZOD (notch) ($kJ/m^2$) | 15.9 | 14.2 | 5.2 | 7.5 | 7.0 |

Table 6

| | Comp. Ex. 5 | Comp. Ex. 6 |
|---|---|---|
| A-1 | 50 | 40 |

Table 6 (continued)

| | Comp. Ex. 5 | Comp. Ex. 6 |
|---|---|---|
| B1-1 | | |
| B1-2 | | |
| B2-1 | 15 | 10 |
| C-3 | 15 | |
| C-4 | | 55 |
| D-1 | 50 | |
| D-3 | | 60 |
| E-1 | 3.2 | 0.05 |
| G-1 | 30 | |
| Burning resistance A (1.6 $mm^t$) | flaming | flaming |
| Burning resistance A (0.8 $mm^t$) | flaming | flaming |
| Flammability B | 28 | 27 |
| IZOD (notch) ($kJ/m^2$) | 14.0 | 1.4 |

Examples 19 through 27 and Comparative Examples 7 through 9

Components (A) to (C) were placed in a Henschel mixer (trade name, product of Mitsui Miike Seisakusho) at compositional proportions shown in the following Tables 7, 8, and 9, and mixed by stirring for two minutes, to thereby obtain a flame retardant for styrene resins falling within the scope of the present invention. In addition, components (D), (F), and (G) were added into the same Henschel mixer at compositional proportions shown in the following Tables 7, 8, and 9, and the resultant mixture was mixed by stirring for three minutes, to thereby obtain a mixture. After the mixture was kneaded at a melt-kneading temperature of 250°C by means of a twin screw extruder (PCM-30, IKEGAI TEKKOSHO), the mixture was extruded into strands and cut into pellets, to thereby obtain a flame-retardant styrene resin composition falling within the scope of the present invention.

The pellets were dried at 80°C for eight hours and molded at a molding temperature of 240°C by means of an injection molding machine (J28SC, product of NIHON SEIKO), to thereby obtain the predetermined test pieces. The test pieces were subjected to tests for evaluating properties. The results are shown in Tables 7, 8, and 9.

Table 7

| | Example 19 | Example 20 | Example 21 | Example 22 | Example 23 |
|---|---|---|---|---|---|
| A-1 | 8 | 8 | 8 | 8 | 10 |
| A-2 | | | | | |
| B1-1 | 5 | 5 | 11 | 7 | 15 |
| B1-2 | 5 | 5 | | | |
| B2-1 | 10 | 10 | 15 | 11 | 12 |
| B3-1 | 3 | 3 | 2.5 | 1.5 | |
| C-5 | | 10 | | | |
| C-1 | | | 8 | | |
| C-2 | | | | | |
| D-1 | 18 | 55 | 74 | 37.6 | 60 |
| D-4 | 74 | 37 | 18 | 56.4 | 30 |
| D-5 | 15 | 15 | | | |

Table 7 (continued)

| | Example 19 | Example 20 | Example 21 | Example 22 | Example 23 |
|---|---|---|---|---|---|
| D-6 | | | 15 | 15 | |
| E-1 | 0.1 | 0.1 | 0.1 | 0.1 | 0.1 |
| F-1 | 1 | 3 | | | |
| F-2 | | | 3 | 1 | |
| Burning resistance A (1.6 $mm^t$) | V-0 | V-0 | V-0 | V-0 | V-0 |
| Burning resistance A (0.8 $mm^t$) | V-0 | V-0 | V-1 | V-0 | V-1 |
| Flammability B | 33 | 32 | 36 | 43 | 41 |
| IZOD (notch) ($kJ/m^2$) | 15.3 | 18.0 | 17.0 | 22.0 | 10.1 |

Table 8

| | Example 24 | Example 25 | Example 26 | Example 27 | Camp. Ex. 7 |
|---|---|---|---|---|---|
| A-1 | 10 | 10 | 10 | | 10 |
| A-2 | | | | 20 | |
| B1-1 | 10 | 10 | 9 | 5 | |
| B1-2 | | | 15 | | |
| B2-1 | 10 | 15 | 5 | 8 | |
| B3-1 | 2 | 2.5 | | 5 | 5 |
| C-5 | | | | | |
| C-1 | | | | | |
| C-2 | | | | 10 | |
| D-1 | 60 | 60 | 70 | 53 | 60 |
| D-4 | 30 | 30 | 20 | 27 | 30 |
| D-5 | | | | | |
| D-6 | | 15 | 15 | 15 | |
| E-1 | 0.1 | 0.1 | 0.1 | 0.1 | 0.1 |
| F-1 | | 0.5 | | | |
| F-2 | | | 5 | 3 | |
| Burning resistance A (1.6 $mm^t$) | V-0 | V-0 | V-0 | V-0 | flaming |
| Burning resistance A (0.8 $mm^t$) | V-0 | V-1 | V-1 | V-1 | flaming |
| Flammability B | 42 | 42 | 30 | 40 | 26 |
| IZOD (notch) ($kJ/m^2$) | 10.2 | 22.0 | 19.7 | 18.1 | 8.1 |

Table 9

| | Comp. Ex. 8 | Comp. Ex. 9 |
|---|---|---|
| A-1 | 10 | |
| A-2 | | |
| B1-1 | | 12 |
| B1-2 | | 15 |
| B2-1 | 105 | |
| B3-1 | | |
| C-5 | | |
| C-1 | | 5 |
| C-2 | | |
| D-1 | 60 | 67 |
| D-4 | 30 | 33 |
| D-5 | | 10 |
| D-6 | | |
| E-1 | 0.1 | 0.1 |
| F-1 | | |
| F-2 | 1 | |
| Burning resistance A (1.6 $mm^t$) | V-0 | V-0 |
| Burning resistance A (0.8 $mm^t$) Flammability B | V-2 43 | V-2 26 |
| IZOD (notch) ($kJ/m^2$) | 1.3 | 10.4 |

Industrial Applicability

The composition of the present invention is a flame-retardant styrene resin composition exhibiting a high degree of flame retardance and excellent impact resistance, and is therefore suitably usable as a flame-retardant material for household electrical appliances, OA equipment, parts of automobiles and rolling stock, and other products.

## Claims

1. A flame retardant for styrene resins, which comprises polyamide (A) and a phosphorus-containing flame retardant (B) containing at least a non-halogenated phosphate ester.

2. A flame retardant for styrene resins according to Claim 1, wherein the phosphorus-containing flame retardant (B) containing at least a non-halogenated phosphate ester is a composition comprising a non-halogenated phosphate ester (B1) and at least one species selected from among ammonium polyphosphate (B2) and red phosphorus (B3).

3. A flame retardant for styrene resins according to Claim 1 or 2, wherein the non-halogenated phosphate ester (B1) is at least one species selected from a compound represented by formula [1]:

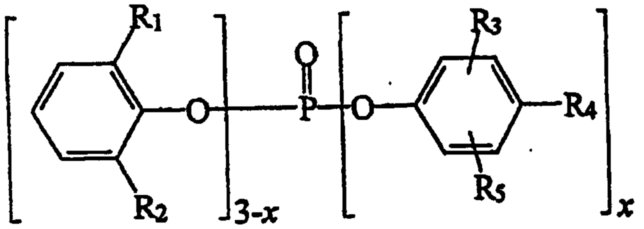

[1]

(wherein x is 0, 1, or 2; $R_1$ and $R_2$, which may be identical with or different from each other, each represent a hydrogen atom or a C1-C9 alkyl group; and $R_3$, $R_4$, and $R_5$, which may be identical with or different from one another, each represent a hydrogen atom or a C1-C9 alkyl group) or a compound represented by formula [2]:

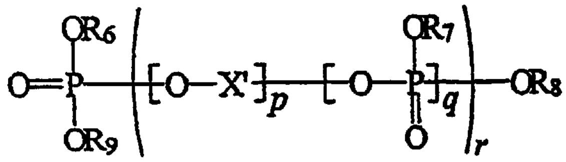

[2]

(wherein each of $R_6$, $R_7$, $R_8$, and $R_9$ represents a hydrogen atom or an organic group (other than the case of $R_6 = R_7 = R_8 = R_9 = H$); X' represents an organic group having a valence of 2 or more; p is 0 or 1; and each of q and r is one or more).

**4.** A flame retardant for styrene resins according to claim 2, wherein ammonium polyphosphate (B2) has a phosphorus content of 25-32 wt.%.

**5.** A flame retardant for styrene resins according to claim 2, wherein red phosphorus (B3) has a phosphorus content of 75-100 wt.%.

**6.** A flame retardant for styrene resins according to any one of claims 1 to 5, wherein the weight ratio of polyamide (A) to the phosphorus-containing flame retardant (B) containing at least a non-halogenated phosphate ester, (A)/(B), is 0.01-5.

**7.** A flame retardant for styrene resins according to claim 2, wherein the weight ratio of a non-halogenated phosphate ester (B1) to ammonium polyphosphate (B2), (B1)/(B2), is 0.05-20.

**8.** A flame retardant for styrene resins according to claim 2, wherein the weight ratio of a non-halogenated phosphate ester (B1) to red phosphorus (B3), (B1)/(B3), is 0.1-100.

**9.** A flame retardant for styrene resins according to claim 2, wherein the phosphorus-containing flame retardant (B) containing at least a non-halogenated phosphate ester is a phosphorus-containing flame retardant comprising a non-halogenated phosphate ester (B1), ammonium polyphosphate (B2), and red phosphorus (B3), and the weight ratio represented by (B1)/{(B2) + (B3)} is 0.05-20.

**10.** A flame retardant for styrene resins, which comprises a flame retardant for styrene resins as recited in any one of claims 1 to 8 and at least one species selected from 5- or 6-membered mono-heterocyclic compounds (C) having two or three C-N bonds or C=N bonds in the ring structure.

**11.** A flame retardant for styrene resins according to claim 10, wherein the weight ratio of the phosphorus-containing flame retardant (B) containing at least a non-halogenated phosphate ester to at least one species selected from 5- or 6-membered mono-heterocyclic compounds (C) having two or three C-N bonds or C=N bonds in the ring structure, (B)/(C), is 0.1-100.

**12.** A flame-retardant styrene resin composition which comprises a styrene resin (D) in an amount of 100 parts by

weight and a flame retardant for styrene resins as recited in any one of claims 1 to 11 in an amount of 5-200 parts by weight.

**13.** A flame-retardant styrene resin composition which comprises a flame-retardant styrene resin composition as recited in claim 12 and a fluororesin (E), the fluororesin (E) being incorporated in an amount of 0.001-10 parts by weight based on 100 parts by weight of the styrene resin (D).

**14.** A flame-retardant styrene resin composition which comprises a flame-retardant styrene resin composition as recited in claim 12 or 13 and a polyorganosiloxane (F), the polyorganosiloxane (F) being incorporated in an amount of 0.01-10 parts by weight based on 100 parts by weight of the styrene resin (D).

**15.** A flame-retardant styrene resin composition according to claim 14, wherein the polyorganosiloxane (F) is a linear-chain or branched-chain organic silicone compound having a skeleton represented by formula [3]:

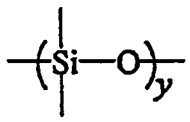

[3]

(wherein y is a number of 2 or more) and an organic group directly connected to Si is at least one group selected from the group consisting of an alkyl group, an alkenyl group, an alkoxy group, a phenyl group, a phenoxy group, an alkyl-substituted phenyl group, an alkyl-substituted phenoxy group, an amino group, a glycidyl group, and a hydroxyalkyl group.

**16.** A flame-retardant styrene resin composition according to any one of claims 12 to 15, wherein the styrene resin (D) is at least one species selected from among polystyrene (PS resin), an acrylonitrile-styrene copolymer (AS resin), high-impact polystyrene (HIPS resin), an acrylonitrile-butadiene-styrene copolymer (ABS resin), an acrylonitrile-acrylic rubber-styrene copolymer (AAS resin), an acrylonitrile-ethylene propylene rubber-styrene copolymer (AES resin), a methyl methacrylate-butadiene-styrene copolymer (MBS resin), a methyl methacrylate-styrene copolymer (MS resin), a methyl methacrylate-acrylonitriie-styrene copolymer (MAS), a styrene-butadiene-styrene copolymer (SBS resin), a hydrogenated product of a styrene-butadiene-styrene copolymer, a styrene-isoprene-styrene copolymer (SIS resin), a hydrogenated product of a styrene-isoprene-styrene copolymer, a styrene-ethylene-butylene-styrene copolymer (SEBS resin), a hydrogenated product of a styrene-ethylene-butylene-styrene copolymer, poly(p-methylstyrene), and acid anhydride-modified products thereof.

**17.** A flame-retardant styrene resin composition according to any one of claims 12 to 16, wherein the resin component comprises a polymer alloy containing a styrene resin (D) and polyphenylene ether.

**18.** A flame-retardant styrene resin composition according to claim 17, wherein the polyphenylene ether content of the polymer alloy is 1-99 wt.%.

**19.** A flame-retardant styrene resin composition which comprises a flame-retardant styrene resin composition as recited in any one of claims 12 to 18 in an amount of 100 parts by weight and inorganic fiber (G) in an amount of 5-40 parts by weight.

**20.** An apparatus in relation to office automation, wherein the apparatus employs a flame-retardant styrene resin composition as recited in any one of claims 12 to 19.

# INTERNATIONAL SEARCH REPORT

International application No. PCT/JP98/05444

A. CLASSIFICATION OF SUBJECT MATTER
Int.Cl$^6$ C08L25/02, C08L51/04, C08L55/02, C08K3/02, C08K5/521, C08K5/34

According to International Patent Classification (IPC) or to both national classification and IPC

B. FIELDS SEARCHED

Minimum documentation searched (classification system followed by classification symbols)
Int.Cl$^6$ C08L1/00-101/14, C08K3/00-13/08

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP, 7-53876, A (Asahi Chemical Industry Co., Ltd.), 28 February, 1995 (28. 02. 95), Claims ; page 8, column 14, lines 6 to 30 (Family: none) | 1, 3<br>2, 5, 6, 8, 10-20 |
| A | JP, 8-245891, A (Mitsubishi Chemical Corp.), 24 September, 1996 (24. 09. 96) (Family: none) | 1-20 |
| A | JP, 8-34926, A (Denki Kagaku Kogyo K.K.), 6 February, 1996 (06. 02. 96) (Family: none) | 1-20 |
| A | JP, 6-57159, A (Asahi Chemical Industry Co., Ltd.), 1 March, 1994 (01. 03. 94) (Family: none) | 1-20 |
| A | JP, 6-128413, A (Kishimoto Sangyo Co., Ltd.), 10 May, 1994 (10. 05. 94) (Family: none) | 1-20 |
| A | JP, 10-195236, A (Asahi Chemical Industry Co., Ltd.), 28 July, 1998 (28. 07. 98) (Family: none) | 1-20 |

[x] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 3 March, 1999 (03. 03. 99) | 16 March, 1999 (16. 03. 99) |
| Name and mailing address of the ISA/<br>Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP98/05444

C (Continuation). DOCUMENTS CONSIDERED TO BE RELEVANT

| Category* | Citation of document, with indication, where appropriate, of the relevant passages | Relevant to claim No. |
|---|---|---|
| A | JP, 10-60160, A (Mitsubishi Chemical Corp.), 3 March, 1998 (03. 03. 98) (Family: none) | 1-20 |

Form PCT/ISA/210 (continuation of second sheet) (July 1992)